# FASCICULE DE BREVET EUROPEEN

(11) **EP 2 032 620 B1**
(45) Date de publication et mention de la délivrance du brevet: **21.10.2009**
(21) Numéro de dépôt: 07803920.3
(22) Date de dépôt: 21.06.2007
(51) Int. Cl.: C08F 292/00, C08K 5/09

(54) **COMPOSITION STABLE POUR LE GREFFAGE CHIMIQUE DE CHARGE INORGANIQUE OU ORGANIQUE SUR UN POLYMÈRE ET PROCÈDE DE GREFFAGE METTANT EN OEUVRE LADITE COMPOSITION**
STABILE ZUSAMMENSETZUNG ZUR CHEMISCHEN TRANSPLANTATION EINES ANORGANISCHEN ODER ORGANISCHEN FÜLLSTOFFS AUF EINEM POLYMER UND TRANSPLANTATIONSVERFAHREN MIT DER ZUSAMMENSETZUNG
STABLE COMPOSITION FOR THE CHEMICAL GRAFTING OF AN INORGANIC OR ORGANIC FILLER ONTO A POLYMER AND GRAFTING PROCESS USING SAID COMPOSITION

(30) Priorité: 23.06.2006 FR 0605656; 02.08.2006 FR 0607069
(43) Date de publication de la demande: 11.03.2009
(73) Titulaire: GTI PROCESS, 95540 Mery sur Oise (FR)
(72) Inventeur: FARGE, Hervé, 78990 Elancourt (FR); LAPAIRY, Jean-Claude, Beauvais 60000 (FR)
(74) Mandataire: Hennion, Jean-Claude
(86) Numéro de dépôt international: PCT/FR2007/051495
(87) Numéro de publication internationale: WO 2007/148025

(56) Documents cités:
- EP-A- 0 018 558
- EP-A- 0 233 119
- EP-A2- 0 538 880
- US-A- 4 151 154

## Description

La présente invention concerne de manière générale le domaine des compositions liquides durcissables pour la synthèse de matériaux composites. Plus particulièrement, l'invention a pour objet une composition stockable stable pour le greffage chimique d'au moins une charge inorganique ou organique comportant au moins un groupe hydroxyle, sur un polymère. L invention se rapporte également à un procédé de greffage chimique d'un acide organique sur une charge inorganique ou organique comportant au moins un groupe hydroxyle, mettant en oeuvre ladite composition, pour obtenir un mélange liquide polymérisable. L'invention concerne en outre l'utilisation dudit mélange liquide, polymérisable notamment en présence d'accélérateurs du type sels métalliques, pour des applications diverses.

Les polymères ont des caractéristiques définies et limitées par leur structure. On cherche donc à les modifier par différentes techniques, entre autre par incorporation de charges selon les caractéristiques finales souhaitées. Ces modifications concernent par exemple les propriétés mécaniques, la résistance thermique, l'ignifugation, ou simplement le coût.

La demanderesse avait déjà décrit dans le document EP 0.233.119 un mélange pour l'obtention par greffage chimique d'une composition liquide, comprenant une charge inorganique ou organique comportant au moins un groupe hydroxyle, un acide organique carboxylique comprenant une double liaison carbone-carbone en résonance avec la double liaison carbone-oxygène du groupe carboxyle, un solvant et une quantité donnée d'un catalyseur radicalaire qui est telle que ledit catalyseur est entièrement consommé lors d'une réaction entre la charge inorganique ou organique et l'acide organique, sans qu'une réaction de polymérisation soit déclenchée.

Cependant, l'incorporation de charges dans un monomère ou un polymère pose des problèmes de dispersion dus à la présence d'agglomérats de particules de charge qui provoquent des hétérogénéités, sources de fragilisation du polymère et de mauvais aspect. De plus, l'absence de liaison entre le polymère et les particules de la charge crée un vide à l'interface ce qui crée des problèmes de fragilisation, de farinage et de grande sensibilité à la salissure.

Pour palier ces inconvénients, on utilise des agents tensioactifs, appelés dispersants, pour supprimer la formation des agglomérats et on cherche à créer une liaison entre les particules de la charge et le polymère, pour que ces particules soient liées au polymère et ne soient plus cause de fragilisation, farinage et encrassage.

Les dispersants utilisés sont nombreux et variés selon la nature des charges et du milieu dans lequel ces charges sont dispersées. Ce sont le plus souvent des copolymères à blocs comprenant une fonction qui vient se mettre sur la charge et une autre qui reste dans la matrice (monomère ou polymère). Les plus performants sont à base de poly oxyde d'éthylène (PEO).

Cependant, l'emploi de tensioactifs à base de PEO présente des inconvénients majeurs. En effet, celui-ci est un agent complexant puissant et bloque les sels métalliques utilisés pour la polymérisation à froid des résines vinyliques, en particulier les résines polyesters.

En poursuivant ses travaux relatifs à l'étude des procédés de greffage chimique et aux compositions mises en oeuvre par ces procédés, la demanderesse a trouvé que, de manière surprenante, une composition comprenant un acide organique carboxylique comprenant une double liaison carbone-carbone en résonance avec la double liaison carbone-oxygène du groupe carboxyle et un agent dispersant à base de PEO reste stable pendant de longues durées (six mois) et peut ainsi être stockée en vue de son utilisation future dans une réaction de greffage chimique du type décrit plus haut, en présence d'un catalyseur radicalaire, conduisant à l'obtention d'un mélange liquide polymérisable. Malgré la présence d'agent dispersant à base de PEO, ce mélange est apte à être polymérisé en présence d'accélérateurs à base de sels métalliques.

Par ailleurs, classiquement, le greffage direct de charges sur des polymères nécessite l'utilisation de peroxydes dans un procédé à chaud. Le greffage en milieu liquide (solvants réactifs ou non) utilise notamment la technique de condensation de silanes fonctionnalisés sur les groupements hydroxyles des charges. On connaît aussi le greffage radicalaire d'acides organiques insaturés. La première technique consiste à hydrolyser le silane fonctionnalisé en silanol puis de condenser celui-ci sur les groupements de la charge par un traitement thermique pour éliminer l'eau générée par cette condensation. La deuxième technique consiste à activer un acide organique insaturé par un peroxyde entre 30 et 80°C. Le radical ainsi formé vient se fixer sur la charge. Pour l'industrie des composites qui utilise des fibres de verre, l'ajout de silane fonctionnalisé est utilisé pour créer une liaison entre la matrice et les fibres de verre. L'utilisation d'un dispersant et d'un agent de greffage est donc nécessaire pour obtenir une liaison optimale entre la charge et la matrice.

Cependant, le mélange PEO et silane est instable et rapidement (en moins d'une heure) il apparaît un précipité que l'analyse RMN du solide détecte comme une condensation du silane. Ce dernier est donc éliminé du milieu et ne peut donc plus remplir son rôle d'agent de greffage. L'utilisation de dispersant à base de PEO interdit donc le greffage à base de silane, selon les techniques connues.

Selon un premier aspect, l'invention a pour objet une composition stockable stable pour le greffage chimique d'au moins une charge inorganique ou organique comportant au moins un groupe hydroxyle sur un polymère, ladite composition comprenant au moins un acide organique carboxylique comprenant une double liaison carbone-carbone en résonance avec la double liaison carbone-oxygène du groupe carboxyle, ladite composition étant caractérisée en ce qu'elle comprend un agent dispersant du type polymère ou copolymère à bloc à base de polyoxyde d'éthylène.

La composition selon l'invention reste stable lorsqu'elle est incorporée à une résine, par exemple du polyester insaturé, ou à un solvant.

Dans un mode de réalisation de l'invention, la composition comprend en outre un alkyltrialkoxysilane (abrévié pour la suite silane).

Selon un deuxième aspect, l'invention a trait à un procédé de greffage chimique d'un acide organique sur une charge inorganique ou organique comportant au moins un groupe hydroxyle, caractérisé en ce qu'il consiste à ajouter à la composition de invention une charge inorganique ou organique comportant au moins un groupe hydroxyle et une quantité donnée d'un catalyseur radicalaire, pour obtenir un mélange liquide, polymérisable notamment en présence d'accélérateurs à base de sels métalliques.

Selon un troisième aspect, l'invention se rapporte aux diverses applications du mélange liquide polymérisable selon l'invention, à savoir la fabrication de matériaux composites présentant notamment des propriétés mécaniques ou feu ou anti-graffiti améliorées.

L'invention va maintenant être décrite en détail.

Selon un premier aspect, l'invention a pour objet une composition stockable stable pour le greffage chimique d'au moins une charge inorganique ou organique comportant au moins un groupe hydroxyle sur un polymère, ladite composition comprenant au moins un acide organique carboxylique comprenant une double liaison carbone-carbone en résonance avec la double liaison carbone-oxygène du groupe carboxyle, ladite composition étant caractérisée en ce qu'elle comprend un agent dispersant du type polymère ou copolymère à bloc à base de polyoxyde d'éthylène.

Cette composition reste stable lorsqu'elle est incorporée à une résine, notamment du type polyester insaturé, ou à un solvant ne comportant pas de groupement hydroxyle ; elle ne réagit qu'à partir du moment où l'on introduit une charge dans la préparation, en présence d'un catalyseur radicalaire, selon le mécanisme de greffage décrit dans le document EP 0.233.119. Dans un mode de réalisation de l'invention, la composition comprend en outre un silane, dont le rôle est d'améliorer la réaction de greffage.

L'analyse infrarouge à transformées de Fourrier (IRTF) de la composition selon l'invention montre une modification des bandes caractéristiques du PEO. L'acide viendrait se fixer par liaisons de Van der Walls sur le PEO l'empêchant ainsi de jouer son rôle complexant vis-à-vis des sels métalliques. Ceci est confirmé par le fait que les résines vinyliques chargées et greffées par ce mélange sont parfaitement polymérisables à froid en utilisant un sel métallique comme accélérateur.

La composition selon l'invention permet d'abaisser la viscosité des résines chargées favorisant ainsi leur mise en oeuvre. Contrairement à des dispersants connus à base de PEO, elle est compatible avec des accélérateurs à base de sels métalliques, notamment de cobalt, vanadium, fer, cuivre, étain, permettant ainsi de réaliser des polymérisations à froid.

Par rapport au procédé de greffage décrit dans le document EP 0.233.119, le rendement du greffage du polymère sur les charges est amélioré par le fait que l'agent dispersant présent dans la composition selon l'invention favorise l'attraction de l'autre ou des autres composant(s) vers les sites hydroxyle présents sur la charge.

L'acide organique carboxylique comprenant une double liaison carbone-carbone en résonance avec la double liaison carbone-oxygène du groupe carboxyle, entrant dans la composition selon l'invention est sélectionné de préférence dans le groupe d'acides : maléique, itaconique, acrylique, méthacrylique, cinnamique, 3-méthylpent-2-enoïque.

Le silane entrant dans la composition selon l'invention est un alkyl tri alkoxysilane sélectionné dans le groupe N-(n-Butyl-3-aminopropyl triméthoxysilane, N-(2-aminoethyl)-3-aminopropyl méthyle diméthoxysilane, 3-aminopropyl méthyle diéthoxysilane, 3-urcido propyl triéthoxysilane, hexadecyl triméthoxysilane, phényle triméthoxysilane, phényltriéthoxysilane, 3-aminopropyl triéthoxysilane, 3-aminopropyl triméthoxysilane, N-2-aminoéthyl-3-aminopropyltriméthoxysilane, tridecafluoro-octyltriéthoxysilane, 3-glycidyloxypropyléthoxysilane, 3-glycidyloxypropylméthoxysilane, isobutyltriéthoxysilane, isobutyltriméthoxysilane, 3-méthacryloxypropyltriméthoxysilane, méthyltri éthoxysilane, 3-mercapto propyl triméthoxysilane, méthyle triméthoxysilane, octyl tri éthoxysilane, octyl tri méthoxysilane, propyl tri éthoxysilane, propyl tri méthoxysilane, vinyl triéthoxysilane, vinyl triméthoxysilane, vinyl(2-méthoxyéthoxy)silane.

Selon un deuxième aspect, l'invention a trait à un procédé de greffage chimique d'un acide organique sur une charge inorganique ou organique comportant au moins un groupe hydroxyle, caractérisé en ce qu'il consiste à ajouter à la composition de l'invention une charge inorganique ou organique comportant au moins un groupe hydroxyle et une quantité donnée d'un catalyseur radicalaire, qui est du type de ceux utilisés pour initier une réaction radicalaire (diazo- ou peroxyde), pour obtenir un mélange liquide, polymérisable notamment en présence d'accélérateurs à base de sels métalliques.

Le catalyseur radicalaire peut être choisi parmi les peroxydes suivants : peroxyde de dibenzoyle, peroxyde de méthyle éthyle cétone, peroxyde de cyclohexanone, peroxyde d'acétyle acétone, peroxydicarbonate de bis (4-tertbutylcyclohexyle), peroxyde de dicumyle, percarbonate de O,O-tertiobutyle et de O-2-éthylhexyle, 2,5-Dimethyl-2,5-di(2- ethylhexanoylperoxy)hexane, peroxy-2-éthylhexanoate de tertiobutyle, 1,1-di(Tert-butylperoxy) cyclohexane, hydro peroxyde de cumyle, 1,1-di(Tert-butylperoxy) - 3,3,5 triméthylcyclohexane, peroxy3,5,5,triméthyl hexanoate de tertio butyle, hydro peroxyde de tertio butyle, peroxybenzoate de tertiobutyle, peroxyde de di-tert-butyle, percarbonate de tertio butyle et d'isopropyle, peroxyde de méthyle iso butyle cétone, peroxyde de tertio butyle et de cumyle.

La charge inorganique est sélectionnée dans le groupe : oxydes métalliques, hydroxydes comme le tri hydrate d'alumine, carbonates, silices. La charge organique peut être la cellulose ou un autre hydrate de carbone.

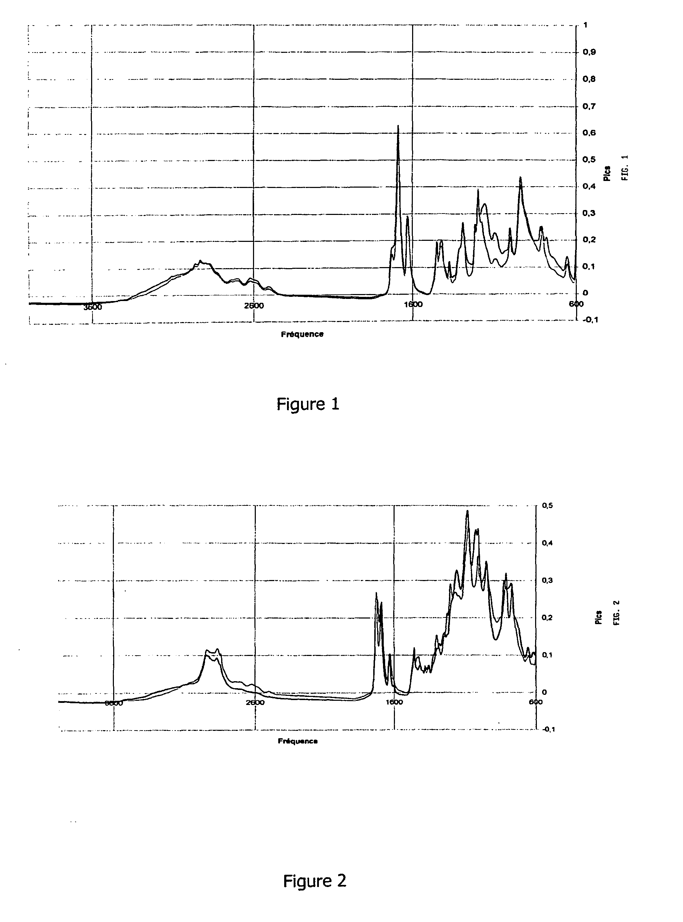

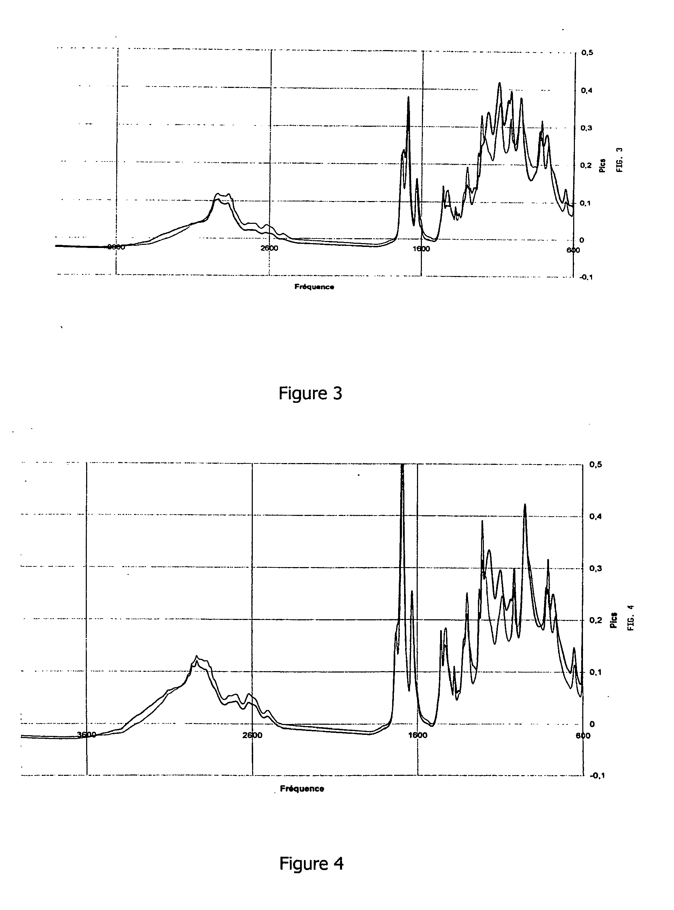

L'analyse IRTF de silice greffée, du type Aérosil 300, montre la présence de groupement carbonyle (pic à 1711,25 cm⁻¹), preuve que l'acide organique a bien été greffé sur la charge. Les résultats sont présentés dans les figures 1 à 4 annexées, dans lesquelles :
- la figure 1 représente le spectre correspondant au mélange d'acide organique carboxylique et de PEO ;
- la figure 2 représente le spectre correspondant au mélange d'acide organique carboxylique, de PEO et de silane, présents en proportions 23%/60%/17% en poids, respectivement ;
- la figure 3 représente le spectre correspondant au mélange d'acide organique carboxylique, de PEO et de silane, présents en proportions 7%/49%/14% en poids, respectivement ;
- la figure 4 représente le spectre correspondant au mélange d'acide organique carboxylique; de PEO et de silane, présents en proportions 58%/33%/9% en poids, respectivement.

Il est donc possible selon l'invention de faire un mélange de dispersant et acide organique insaturé, éventuellement en présence de silane fonctionnalisé, prêt à l'emploi, pour effectuer un greffage optimisé de charge, ainsi que le post greffage des fibres de verre dans les applications composites. Les proportions relatives des constituants du mélange sont fonction de la nature de la charge à traiter.

Selon un troisième aspect, l'invention se rapporte aux diverses applications du mélange liquide polymérisable selon l'invention, à savoir la fabrication de matériaux composites présentant notamment des propriétés mécaniques ou feu ou anti-graffiti améliorées.

L'invention sera mieux comprise à la lecture des exemples de réalisation suivants donnés à titre non limitatif de l'invention.

### Exemple 1. Conditions de stockage de la composition selon l'invention

La composition selon l'invention, comprenant un dispersant à base PEO, éventuellement un silane et acide organique, est stable pendant de périodes relativement longues (quelques mois), sans formation de précipité. Au bout de six mois, un mélange comprenant 40 parties de PEO, 35 parties d'acide méthacrylique et 15 parties de VTMO ne présente aucune trace de précipité. Nous avons réalisé différents mélanges d'un copolymère à blocs, PEO-PCL, d'un silane (VTMO), et d'un acide organique insaturé (AMA) selon les quantités décrites dans le tableau suivant:

| Copolymère | VTMO | AMA |
|---|---|---|
| 8 | 2 | 0 |
| 7,5 | 1,875 | 0,625 |
| 7,2 | 1,8 | 1 |
| 7 | 1,75 | 1,25 |
| 6,8 | 1,7 | 1,5 |
| 6,6 | 1,65 | 1,75 |
| 6,4 | 1,55 | 2 |
| 6,2 | 1,5 | 2,25 |

Ces mélanges sont conditionnés dans des flacons en verre fermés et placés à l'étuve à 50°C. Après 18 heures passées à l'étuve, on aperçoit dans le premier mélange la présence de traces de gel sur les parois du flacon. Après 5 jours à l'étuve, aucun des autres mélanges n'a évolué. Ceci met en évidence la propriété qu'a l'acide de bloquer la condensation du silane par complexation de la fonction du PEO qui catalyse la condensation. L'analyse RMN montre bien qu'il s'agit de silane condensé.

Un mélange sans acide a été conditionné en coupelle ouverte. On constate la formation d'un film en surface au bout de 15 minutes. Le mélange se comporte différemment selon qu'il est en flacon fermé ou en coupelle ouverte. Nous avons émis l'hypothèse que, en coupelle ouverte, le mélange pouvait absorber l'humidité de l'air, ce qui provoquerait l'hydrolyse du silane, première étape de sa condensation.

A 10 grammes d'un mélange sans acide on a rajouté 0,5 g d'eau distillée. Ce mélange a été conditionné en flacon bouché et mis à 50°C à l'étuve. Aucun précipité, ni gel n'est apparu. Ce n'est donc pas l'humidité de l'air qui amorcerait l'hydrolyse du silane. Nous avons réalisé deux fois 10 g du mélange sans acide en coupelle ouverte. Dans l'un, on a rajouté 1 g d'alcool (isobutanol). Celui sans alcool a eu un temps d'apparition du film de 12 minutes. Celui avec alcool a eu un temps de 20 minutes. On suppose que l'hydrolyse du silane est conditionnée par l'évaporation du méthanol. Ceci expliquerait pourquoi les mélanges en flacons fermés sont stables. L'analyse IRTF de mélanges type 8063 récent, datant de 2 mois et 4 mois ne montre pas d'évolution sensible.

### Exemple 2. Greffage de l'acide organique et du dispersant à base de PEO sur la silice pyrogénée

Il a été choisi l'Aérosil^{®} 300 en raison de sa forte surface spécifique (300 m²/g) qui permet de détecter le greffage de composés organiques à sa surface par spectrométrie infra rouges.

On réalise le mélange suivant : 1g d'acide méthacrylique, 0,5 g de dispersant BYK^{®} W9010, 2,5 g dAérosil^{®} 300, 50 g de toluène. On porte le tout à 85°C sous agitation. On rajoute 0,135 g de peroxyde de dibenzoyle à 50% (Lucidol CH50). On constate très rapidement une forte chute de viscosité.

On laisse le mélange sous agitation et à température de 85°C pendant 30 minutes. On laisse refroidir la suspension, puis on la centrifuge pendant 15 minutes. On évacue la phase liquide qui surnage. On la remplace par du toluène pur. On disperse la silice dans ce toluène pour effectuer un rinçage. On répète l'opération quatre fois pour éliminer toute trace de composé organique autre que le toluène non fixé sur la silice.

Après la dernière centrifugation, on récupère la silice et on l'étuve une nuit à 90°C pour éliminer par évaporation tout le toluène. On obtient ainsi une poudre blanche que l'on passe au spectromètre Infra rouge à transformée de Fourier ainsi que l'Aérosil pur.

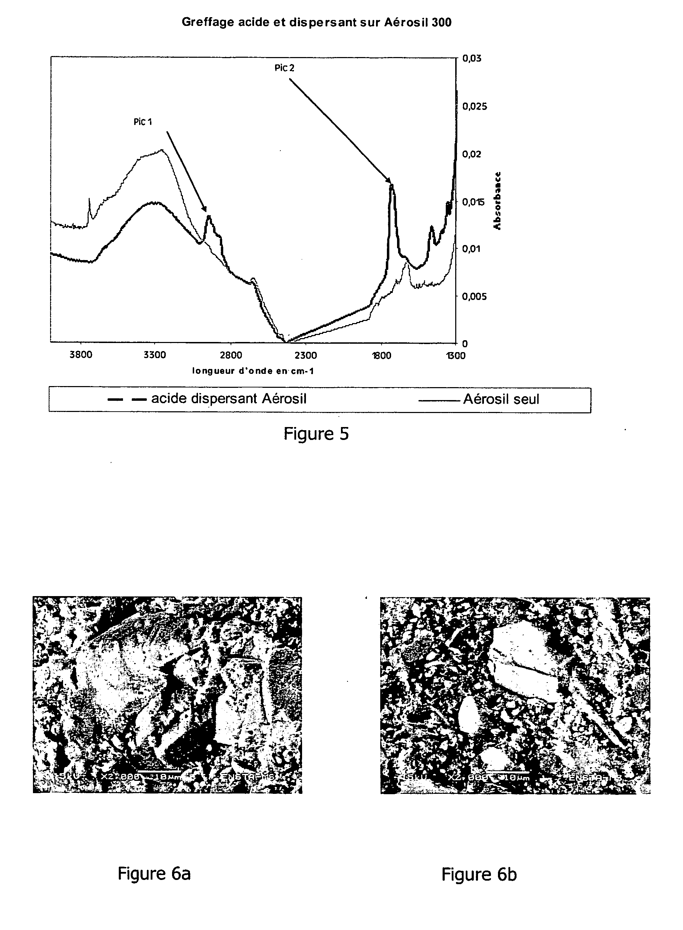

Comme le montrent les spectres présents dans la figure 5 annexée, il apparaît des pics à 1726 cm-1 correspondant à un groupe carbonyle et 2937 cm-1 correspondant à des groupes CH2 et CH3. Il a donc bien été greffé des radicaux organiques à la surface de la silice.

### Exemple 3. Greffage de l'acide organique et du dispersant à base de PEO sur le tri hydrate d'alumine (ATH)

Pour améliorer la tenue au feu des matériaux organiques, on ajoute classiquement du tri hydrate d'alumine (ATH). Ce produit dégage son eau de composition à partir de 400°C en consommant une très forte énergie venant de la combustion. Les ignifugeants chlorés ou bromés sont maintenant proscrits en raison de leur toxicité.

Dans les procédés actuels, en particulier dans les résines polyester, on ne peut pas dépasser 50% en poids d'ATH, car les viscosités deviennent alors rédhibitoires.

Pour obtenir des qualités améliorées de comportement au feu, l'expérience a montré que, sans halogènes ni antimoine, il fallait un minimum de 74% d'ATH en poids.

Selon le procédé de l'invention, il est possible d'obtenir la même viscosité qu'une résine classique chargée à 50%, en incorporant dans 35 parts de résine polyester, 75 parts d'ATH, grâce au greffage obtenu avec l'ajout de 1,5 parts d'un mélange acide organique et dispersant à base de PEO, la réaction étant amorcée par du peroxyde de dibenzoyle.

La figure 6 annexée représente des vues au microscope électronique à balayage d'une fracture de résine polyester chargée d'ATH.

On observe sur la figure 6a (ayant utilisé le procédé de greffage selon l'invention) que la rupture se situe dans la matrice polyester et dans la charge, alors que sur la figure 6b (sans greffage), la rupture apparaît uniquement sans la matrice ce qui prouve qui! n'y a pas de liaison matrice charges.

### Exemple 4. Greffage de l'acide organique et du dispersant à base de PEO sur silice

On connaît actuellement des bétons de résine formulés de la façon suivante : pour 100 parts en poids d'un mélange de silice de 3 à 250 microns, 12 parts en poids de résine polyester.

En assurant un greffage avec 1,3 parts d'un mélange d'acide organique, de dispersant à base de PEO et de silane, amorcée par du peroxyde de dibenzoyle on peut baisser la quantité de résine à 7 parts toute en maintenant la même viscosité et les mêmes performances mécaniques une fois polymérisé.

### Exemple 5. Greffage de l'acide organique et du dispersant à base de PEO sur aluminium

On cherche actuellement à obtenir des résines à haute conductivité thermique toute en étant isolants électriques pour enrober les bobinages des moteurs ou alternateurs électriques et augmenter de façon significative leur refroidissement.

On réalise une composition comprenant 100 parts d'un mélange de poudre d'aluminium de 4 à 21 microns et d'une silice de diamètre inférieur ou égal à 1 µm dispersé dans 13 parts de résine polyester et greffé à l'aide de 1,2 parts du mélange acide organique, dispersant à base de PEO et silane, réaction amorcée par du peroxyde de dibenzoyle.

Cette composition est assez fluide pour bien pénétrer à intérieur des bobinages. Après polymérisation, le produit obtenu dépasse le taux de percolation des grains d'aluminium d'où une très bonne conductivité thermique 3,3 W/m°K ce qui est au moins trois fois supérieur aux produits actuels.

### Exemple 6. Greffage de l'acide organique et du dispersant à base de PEO sur ATH et fibres de verre

On utilise la formulation de l'exemple 3. On lui ajoute 1% en poids de mélange d'acide organique, de dispersant à base de PEO et de silane.

Lors de la mise en oeuvre de cette formulation en imprégnation de fibre de fibre de verre, catalysée avec un peroxyde et éventuellement accélérée avec un sel métallique ou une amine, on obtient un greffage de la matrice sur les fibres de verre selon le procédé de l'invention.

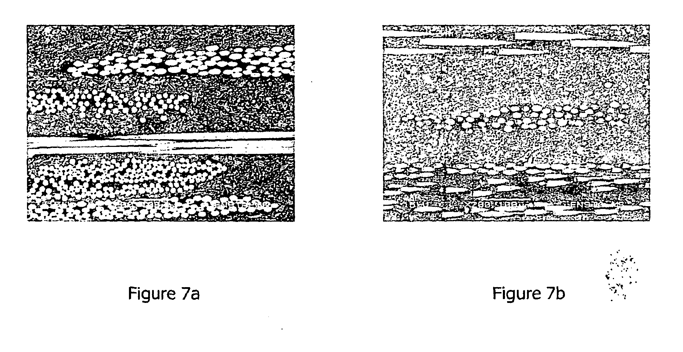

La figure 7 représente des vues au microscope électronique à balayage d'une coupe de résine polyester chargée d'ATH et de fibres de verre.

On observe sur la figure 7a (ayant utilisé le procédé de greffage selon l'invention) que les fibres de verre ne présentent aucune rupture provenant de la découpe, puis du polissage à la poudre diamantée, alors que sur la figure 7b (sans greffage), les fibres sont brisées, ce qui prouve qu'elles ne sont pas liées à la matrice.

### Exemple 7. Greffage de l'acide organique et du dispersant à base de PEO sur carbonate de calcium

On connaît actuellement des BMC (Bulk Molding Compound) formulés de la façon suivante : pour 100 parts en poids d'un mélange de résine, additif « low profile » et divers autres composants, on ajoute 230 parts de carbonate de calcium de 3µm diamètre (en moyenne) et 20% de fibre de verre coupée.

On obtient la même rhéologie en passant la part de carbonate de 230 parts à 400 parts avec greffage à l'aide de 3 parts du mélange acide organique, dispersant à base de PEO et silane, la réaction étant amorcée par du peroxyde de dibenzoyle.

Une fois le BMC polymérisé, on obtient des performances mécaniques au moins équivalentes et surtout des aspects de surface bien supérieurs avec absence de microporosité.

### Exemple 8. Greffage de l'acide organique et du dispersant à base de PEO sur le tri hydrate d'alumine (ATH) dans un monomère acrylique, uréthane multifonctionnel en vue d'améliorer les qualités antigraffiti d'un gelcoat ignifugé

Pour obtenir un revêtement antigraffiti, il faut d'une part que la surface du matériau ait une résistance chimique suffisante, et d'autre part qu'il y ait une liaison chimique entre les charges et la matrice pour éviter des interstices créant des porosités.

La demande de brevet français N° 04 09976 déposée par la demanderesse décrit ces conditions et donne des exemples de compositions de revêtement.

En utilisant des monomères acryliques uréthanes multifonctionnels, en lieu et place du monomère acrylique dérivé du bisphénol A, on obtient les mêmes qualités antigraffiti. De plus ces monomères sont plus réactifs et donc plus facile à bien polymériser en surface pour éviter la moindre présence d'une double liaison libre interdisant d'être antigraffiti. Enfin, une fois polymérisé, le matériau présente l'avantage d'avoir une meilleure tenue aux UV que le matériau à base de monomère acrylique dérivé du bisphénol A.

## Revendications

1. Composition stockable stable pour le greffage chimique d'au moins une charge comportant au moins un groupe hydroxyle, sur un polymère, ladite composition comprenant au moins un acide organique carboxylique comprenant une double liaison carbone/carbone en résonance avec la double liaison carbone/oxygène du groupe carboxyle, ladite composition étant **caractérisée en ce qu'**elle comprend un agent dispersant du type polymère ou copolymère à bloc à base de polyoxyde d'éthylène.

2. Composition selon la revendication 1, comprenant en outre une résine vinylique.

3. Composition selon la revendication 1, comprenant en outre un solvant ne comportant pas de groupement hydroxyle.

4. Composition selon l'une des revendications 1 à 3, comprenant en outre un alkyl tri alkoxysilane.

5. Composition selon l'une quelconque des revendications 1 à 4, dans laquelle l'acide organique carboxylique est sélectionné de préférence dans le groupe d'acides : maléique, itaconique, acrylique, méthacrylique, cinnamique, 3-méthylpent-2-enoïque.

6. Procédé de greffage chimique d'un acide organique sur une charge comportant au moins un groupe hydroxyle, **caractérisé en ce qu'**il consiste à ajouter à la composition selon l'une des revendications 1 à 4 une charge et une quantité donnée d'un catalyseur radicalaire, pour obtenir un mélange liquide polymérisable.

7. Procédé selon la revendication 6 dans lequel la charge est sélectionnée dans le groupe : oxydes métalliques, hydroxydes, carbonates, silices, cellulose.

8. Procédé selon l'une des revendications 6 ou 7 dans lequel le catalyseur radicalaire est choisi par exemple parmi les peroxydes suivants : peroxyde de dibenzoyle, peroxyde de méthyle éthyle cétone, peroxyde de cyclohexanone, peroxyde d'acétyle acétone, peroxydicarbonate de bis (4-tertbutylcyclohexyle), peroxyde de dicumyle, percarbonate de O,O-tertiobutyle et de O-2-éthylhexyle, 2,5-Dimethyl-2,5-di(2- ethylhexanoylperoxy)hexane, peroxy-2-éthylhexanoate de tertiobutyle, 1,1-di(Tert-butylperoxy) cyclohexane, hydro peroxyde de cumyle, 1,1-di(Tert-butylperoxy)-3,3,5-triméthylcyclohexane, Peroxy3,5,5, triméthyl hexanoate de tertio butyle, hydro peroxyde de tertio butyle, peroxybenzoate de tertiobutyle, peroxyde de di-tert-butyle, percarbonate de tertio butyle et d'isopropyle, peroxyde de méthyle iso butyle cétone, peroxyde de tertio butyle et de cumyle.

9. Utilisation du mélange liquide polymérisable obtenu par le procédé selon l'une des revendications 6 à 8, la charge minérale comprenant du tri hydrate d'alumine et des fibres de verre, pour la fabrication de matériaux composites présentant des propriétés mécaniques améliorées.

10. Utilisation du mélange liquide polymérisable obtenu par le procédé selon l'une des revendications 6 à 8, la charge minérale comprenant du tri hydrate d'alumine, pour la fabrication de matériaux composites résistants au feu.

11. Utilisation du mélange liquide polymérisable obtenu par le procédé selon l'une des revendications 6 à 8, ledit mélange comprenant un monomère acrylique uréthane multifonctionnel et la charge minérale comprenant du tri hydrate d'alumine, pour la fabrication de matériaux composites anti-graffiti.

12. Utilisation du mélange liquide polymérisable obtenu par le procédé selon l'une des revendications 6 à 8, la charge minérale comprenant du carbonate de calcium, pour la fabrication de matériaux composites destinés à l'obtention de pièces moulées présentant un état de surface amélioré.

## Claims

1. A stable storable composition for chemical grafting of at least one filler including at least one hydroxyl group, on a polymer, said composition comprising at least one organic carboxylic acid comprising a double carbon/carbon bond in resonance with the carbon/oxygen bond of the carboxyl group, said composition being **characterized in that** it comprises a dispersant of the block polymer or copolymer type based on poly(ethylene oxide).

2. The composition according to claim 1, further comprising a vinyl resin.

3. The composition according to claim 1, further comprising a solvent which does not include any hydroxyl group.

4. The composition according to any of claims 1 to 3, further comprising an alkyl tri-alkoxysilane.

5. The composition according to any of claims 1 to 4, wherein the organic carboxylic add is preferably selected from the group of acids: maleic, itaconic, acrylic, methacrylic, cinnamic, 3-methylpent-2-enoic acids.

6. A method for chemical grafting of an organic acid on a filler including at least one hydroxyl group, **characterized in that** it consists of adding to the composition according to any of claims 1 to 4, a filler and a given amount of a radical catalyst in order to obtain a polymerizable liquid mixture.

7. The method according to claim 6, wherein the filler is selected from the group: metal oxides, hydroxides, carbonates, silicas, cellulose.

8. The method according to any of claims 6 or 7, wherein the radical catalyst is for example selected from the following peroxides: dibenzoyl peroxide, methylethylketone peroxide, cyclohexanone, peroxide, acetylacetone peroxide, bis(4-tertbutylcyclohexyl)peroxydicarbonate, dicumyl peroxide, O,O-tertiobutyl and 0-2-ethylhexyl percarbonate, 2,5-dimethyl-2,5-di(2-ethylhexanoylperoxy)hexane, tertio-butylperoxy-2-ethyl hexanoate, 1,1-di(tertbutylperoxy) cyclohexane, cumyl hydroperoxide, 1,1-di(tert-butylperoxy)-3,3,5-trimethylcyclohexane, tertbutyl peroxy-3,5,5-trimethyl hexanoate, tertiobutyl hydroperoxide, tertiobutyl peroxy-benzoate, di-tertbutyl peroxide, tertiobutyl and isopropyl percarbonate, methylisobutylketone peroxide, tertiobutyl and cumyl peroxide.

9. The use of the polymerizable liquid mixture obtained by the method according to any of claims 6 to 8, the mineral filler comprising alumina trihydrate and glass fibers, for making composite materials having improved mechanical properties.

10. The use of the polymerizable liquid mixture obtained by the method according to any of claims 6 to 8, the mineral filler comprising alumina trihydrate for making fire-resistant composite materials.

11. The use of the polymerizable liquid mixture obtained by the method according to any of claims 6 to 8, said mixture comprising a multifunctional urethane acrylic monomer and the mineral filler comprising alumina trihydrate for making anti-graffiti composite material.

12. The use of the polymerizable liquid mixture obtained by the method according to any of claims 6 to 8, the mineral filler comprising calcium carbonate, for making composite materials intended for obtaining molded parts having an improved surface condition.

## Patentansprüche

1. Stabile lagerungsfähige Zusammensetzung für das chemische Pfropfen wenigstens eines Füllstoffs, der wenigstens eine Hydroxygruppe aufweist, auf ein Polymer, wobei die Zusammensetzung wenigstens eine organische Carbonsäure mit einer Kohlenstoff-Kohlenstoff-Doppelbindung in Resonanz mit der Kohlenstoff-Sauerstoff-Doppelbindung der Carboxylgruppe umfaßt, wobei die Zusammensetzung **dadurch gekennzeichnet ist, daß** sie ein Dispergiermittel vom Typ Blockpolymer oder -copolymer auf Polyethylenoxidbasis umfaßt.

2. Zusammensetzung nach Anspruch 1, die ferner ein Vinylharz aufweist.

3. Zusammensetzung nach Anspruch 1, die ferner ein Lösungsmittel aufweist, das keine Hydroxygruppe umfaßt.

4. Zusammensetzung nach einem der Ansprüche 1 bis 3, die außerdem ein Alkyltrialkoxysilan umfaßt.

5. Zusammensetzung nach einem der Ansprüche 1 bis 4, bei der die organische Carbonsäure vorzugsweise aus der folgenden Gruppe von Säuren, nämlich der Maleinsäure, Itaconsäure, Acrylsäure, Methacrylsäure, Zimtsäure, 3-Methylpent-2-enonsäure ausgewählt ist.

6. Verfahren zum chemischen Pfropfen einer organischen Säure auf einen Füllstoff, der wenigstens eine Hydroxygruppe aufweist, **dadurch gekennzeichnet, daß** es darin besteht, der Zusammensetzung nach einem der Ansprüche 1 bis 4 einen Füllstoff sowie eine gegebene Menge eines radikalischen Katalysators zuzugeben, um ein polymerisierbares flüssiges Gemisch zu erhalten.

7. Verfahren nach Anspruch 6, bei dem der Füllstoff aus der folgenden Gruppe, nämlich Metalloxiden, Hydroxiden, Carbonaten, Kieselerden, Cellulose ausgewählt ist.

8. Verfahren nach einem der Ansprüche 6 oder 7, bei dem der radikalische Katalysator beispielsweise aus den folgenden Peroxiden ausgewählt ist, nämlich Dibenzoylperoxid, Methylethylketonperoxid, Cyclohexanonperoxid, Acetylacetonperoxid, Bis(4-tertbutylcyclohexyl)-peroxydicarbonat, Dicumylperoxid, O,O-tert-butyl- und O-2-ethylhexyl-percarbonat, 2,5-Dimethyl-2,5-di(2-ethylhexanoylperoxy)hexan, tert-Butyl-peroxy-2-ethylhexanoat, 1,1-Di(tert-butylperoxy)cyclohexan, Cumylhydroperoxid, 1,1-Di(tert-butylperoxy)-3,3,5-trimethylcyclohexan, Tert-butyl-peroxy-3.5,5,trimethyl-hexanoat, tert-Butylhydroperoxid, tert-Butylperoxybenzoat, Di-tert-butylperoxid, tert-Butyl- und Isapropylpercarbonat, Methylisobutylketonperoxid, tert-Butyl- und Cumylperoxid.

9. Verwendung des polymerisierbaren flüssigen Gemischs, das mittels des Verfahrens nach einem der Ansprüche 6 bis 8 erhalten wird, wobei der mineralische Füllstoff Aluminiumoxid-Trihydrat sowie Glasfasern enthält, für die Herstellung von Verbundwerkstoffen mit verbesserten mechanischen Eigenschaften.

10. Verwendung des polymerisierbaren flüssigen Gemischs, das mittels des Verfahrens nach einem der Ansprüche 6 bis 8 erhalten wird, wobei der mineralische Füllstoff Aluminiumoxid-Trihydrat enthält, für die Herstellung von feuerbeständigen Verbundwerkstoffen.

11. Verwendung des polymerisierbaren flüssigen Gemischs, das mittels des Verfahrens nach einem der Ansprüche 6 bis 8 erhalten wird, wobei das Gemisch ein multifunktionales Urethan-Acrylmonomer und der mineralische Füllstoff Aluminiumoxid-Trihydrat enthält, für die Herstellung von graffitiabweisenden Verbundwerkstoffen.

12. Verwendung des polymerisierbaren flüssigen Gemischs, das mittels des Verfahrens nach einem der Ansprüche 6 bis 8 erhalten wird, wobei der mineralische Füllstoff Calciumcarbonat enthält, für die Herstellung von Verbundwerkstoffen, die für den Erhalt von Gußteilen mit verbessertem Oberflächenzustand bestimmt sind.
